Europäisches Patentamt

European Patent Office

Office européen des brevets

(11) Veröffentlichungsnummer: **0 328 887**
A1

## EUROPÄISCHE PATENTANMELDUNG

(21) Anmeldenummer: 89100806.2

(22) Anmeldetag: 18.01.89

(51) Int. Cl.4: **G05B 19/42** , **G05B 19/18**

(30) Priorität: 18.02.88 DE 3805122

(43) Veröffentlichungstag der Anmeldung:
23.08.89 Patentblatt 89/34

(84) Benannte Vertragsstaaten:
CH DE FR GB IT LI SE

(71) Anmelder: Siemens Aktiengesellschaft
Wittelsbacherplatz 2
D-8000 München 2(DE)

(72) Erfinder: Kästner, Wolfgang, Ing. grad.
Daiserstrasse 33
D-8000 München 70(DE)
Erfinder: Hartmann, Gunter, Dipl.-Ing.
Hohenwaldeckstrasse 2
D-8000 München 90(DE)

(54) Anordnung zum Beeinflussen von automatisierten Prozessen mit Industrierobotern, zum Beispiel beim Abdecken von elektronischen Bauteilen auf Hybridschaltungen.

(57) Anordnung zum Beeinflussen von automatisierten Prozessen mit Industrierobotern, zum Beispiel beim Abdecken von elektronischen Bauteilen auf Hybridschaltungen.

Der Erfindung liegt die Aufgabe zugrunde, eine Anordnung zu schaffen, die die Anpassung eines IR-Grundprogramms, das "off-line" erstellt wurde, während eines ablaufenden Prozesses ermöglicht.

Über Signalgeber, zum Beispiel Potentiometer, ist in Verbindung mit der Sensorschnittstelle (6) eine Verschiebung des Bewegungsmusters in x- und/oder y-Richtung möglich. Darüber hinaus sind Größenveränderungen des Bewegungsmusters in beiden Koordinatenrichtungen unabhängig voneinander auch während des Bewegungsablaufs zu erzielen.

Elektronische Schaltungen.

FIG 2

EP 0 328 887 A1

Anordnung zum Beeinflussen von automatisierten Prozessen mit Industrierobotern, zum Beispiel beim Abdecken von elektronischen Bauteilen auf Hybridschaltungen.

Die Erfindung betrifft eine Anordnung nach dem Oberbegriff des Patentanspruchs. Eine derartige Anordnung kann beispielsweise zum Abdecken von Bauelementen auf Hybridschaltungen durch Auftragen von Epoxy-Masse zum Einsatz kommen.

Es ist bekannt, programmierbare Geräte, zum Beispiel Industrieroboter (IR), zum Ausführen von verschiedenen Prozeßabläufen einzusetzen. Es hat sich auch als zweckmäßig herausgestellt, zum Auftragen von Abdeckmassen, zum Beispiel in der Autoindustrie, wegen der kinematischen und programmtechnischen Flexibilität Industrieroboter einzusetzen. Beim heutigen Stand der Technik ist es gebräuchlich, diese Geräte "teach-in" zu programmieren, das heißt die Programme direkt am konkreten Einsatzfall zu erstellen. Da dies aber einerseits Produktionskapazität bindet und andererseits bei kontinuierlich ablaufenden Prozessen, zum Beispiel beim Auftragen von Abdeckmassen, erhebliche Schwierigkeiten bereitet, ist es von Vorteil, derartige Aufgaben "off-line" zu programmieren. Die "off-line" erstellten Programme erfordern aber eine Anpassung an die realen Bauteile und Prozeßverhältnisse. In verschiedenen Anwendungsfällen ist es nun aber nicht möglich, mit zum Beispiel visueller Sensortechnik das Prozeßergebnis zu überwachen und zu korrigieren.

Der Erfindung liegt die Aufgabe zugrunde, eine Anordnung zu schaffen, die die Anpassung eines IR-Grundprogramms, das "off-line" erstellt wurde, während eines ablaufenden Prozesses ermöglicht. Wenn es sich beim Anwendungsbeispiel einer derartigen Anordnung um das Abdecken von Bauelementen auf Hybridschaltungen handelt, müssen Fertigungstoleranzen der Schaltungen, sowie unterschiedliches Fließverhalten der Abdeckmasse ausgeglichen werden. Zur qualitativen Verbesserung des Auftrages der Abdeckmasse wird ein kontinuierliches Bahnfahren mit entsprechenden Geschwindigkeiten vorausgesetzt. Ein Ausgleich von Fertigungstoleranzen der Materialien, aus dem die Nutzen bestehen, und veränderlichen Fließeigenschaften des Kunstharzes als Abdeckmasse soll während des Prozesses möglich sein. Darüber hinaus soll die Einführung neuer Schaltungs-Layouts problemlos und schnell durch Optimierung von Bewegungsparametern der off-line erstellten IR-programme beherrscht werden.

Diese Aufgabe wird gemäß dem Kennzeichen des Patentanspruchs 1 gelöst. Die Bewegungsumkehr ist Gegenstand des Anspruchs 2. Statt eines Potentiometers können selbstverständlich auch andere Signalgeber Verwendung finden.

Ein Vorteil dieser Lösung besteht darin, daß ein Grundprogramm für mehrere Anwendungsfälle eingesetzt werden kann und daß die Korrektur auch personell vorgenommen werden kann. Auf diese Weise ist es möglich, daß Abweichungen, die sensormäßig nicht oder nur sehr schwer erfaßt werden können, sicher ausgleichbar sind. Außerdem wird mit dieser Anordnung der üblicherweise in der Programmierphase entstehende Ausschuß vermieden.

Die Erfindung wird anhand der Figuren erläutert. Es zeigen:

Figur 1 ein Schema eines Nutzens mit abzudeckenden Bereichen,

Figur 2 schematisch eine gesamte Anlage,

Figur 3 die Aufzeichnung der IR-Bewegungen zum Beispiel bei einem Epoxydharzauftrag und

Figur 4 die Struktur der IR-Programmierung.

Als Ausführungsbeispiel wird das Abdecken von Bauelementen auf Hybridschaltungen durch Auftragen von Epoxy-Masse zugrundegelegt. Die Hybridschaltungen werden im Nutzen auf Keramikträgern von ca. 80 mm x 80 mm gefertigt. Bei den ca. 20 unterschiedlichen Typen sind meist 2 x 6 Einzelschaltungen auf einem Nutzen.

In der Regel sind pro Schaltung zwei Bereiche mit gebondeten Chips mit dem Epoxy-Auftrag zu versehen. Zum einen muß der Auftrag dick genug sein, um zum Beispiel Bond-Loops zu überdecken, zum andern aber müssen benachbarte Schichtwiderstände usw. frei bleiben, um zum Beispiel einen Laserabgleich zu ermöglichen.

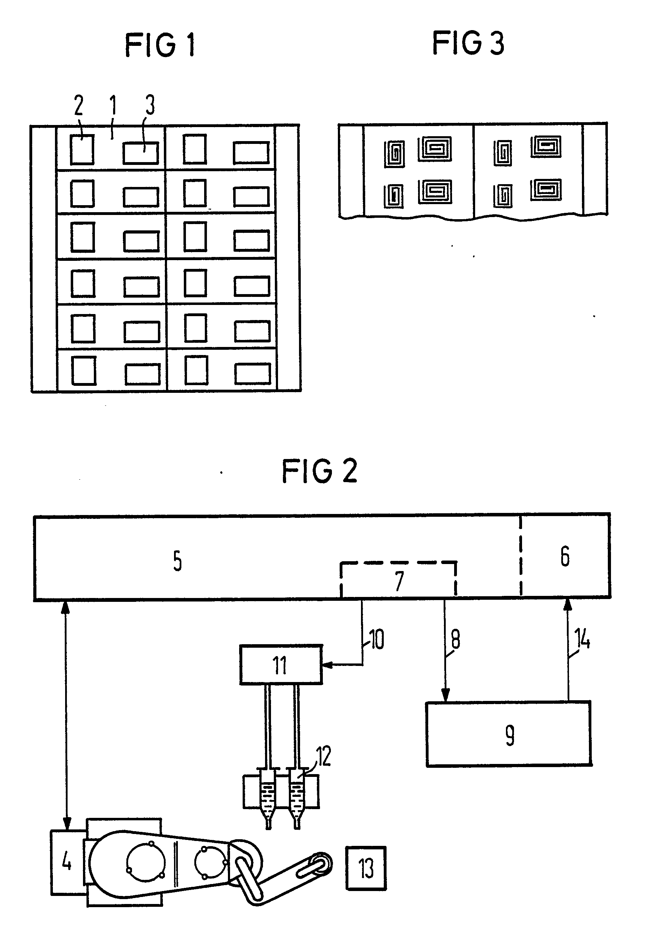

Die Figur 1 zeigt einen entsprechenden Nutzen mit Hybridschaltungen, der beispielsweise aus zwölf Einzelschaltungen 1 besteht. Jede Einzelschaltung hat in diesem Fall zwei abzudeckende Flächenbereiche 2, 3.

In der Figur 2 ist mit 4 ein IR bezeichnet, zu dem eine Steuerung 5 mit einer Sensorschnittstelle 6 gehört. Von den Ausgängen 7 dieser Steuerung führt eine Gruppe 8 zu einer Eingabeeinrichtung 9 und eine weitere Gruppe 10 zu Dosiergeräten 11. An den Dosiergeräten II sind entsprechend dem Ausführungsbeispiel Kartuschen 12 - zum Beispiel mit Epoxy-Masse - angeschlossen, die im vorliegenden Fall vom IR verfahren werden. Der Bewegungsablauf kann auch umgekehrt erfolgen, das heißt die Kartuschen 12 sind ortsfest und der IR verfährt den oder die Nutzen 1. 13 stellt symbolisch die Aufnahme für den Nutzen (Figur 1) dar, die gegebenenfalls beheizbar ist. Von der Einrichtung 9 führen Verbindungen 14 zur Sensorenschnittstelle, über die Korrekturwerte zurückgeführt werden. Die Einrichtung 9 enthält zum Beispiel Korrekturpotentiometer mit den erforderlichen Stromversorgungen.

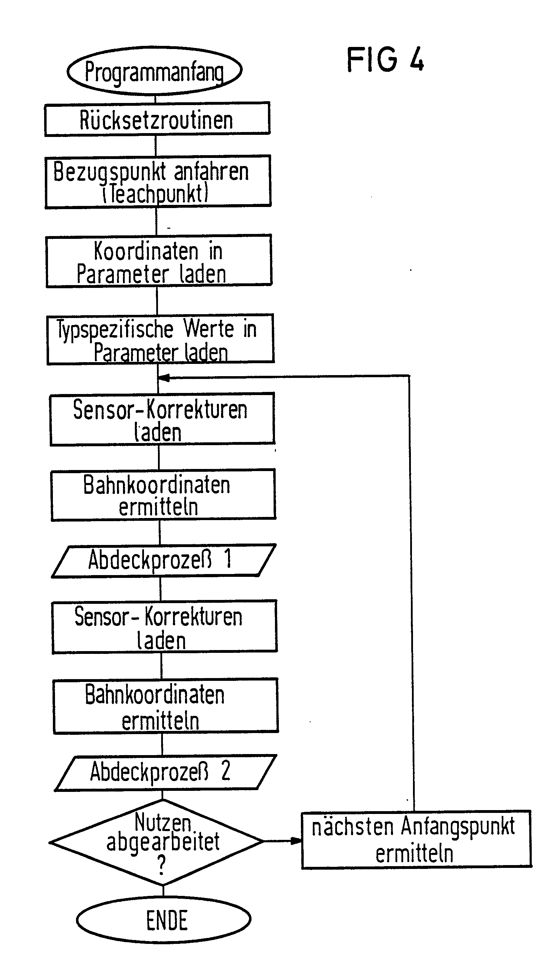

Um die in Figur 1 gezeigten Flächen abzudecken, muß der IR die Kartusche in einer mäanderförmigen Bahn (Bewegungsmuster), wie in Figur 3 aufgezeichnet, über der Hybridschaltung verfahren. Die hierfür erforderliche Programmstruktur zeigt Figur 4.

Beim Programmanfang (Figur 4) wird das Programm gestartet und anschließend sämtliche typspezifische Korrekturwerte gelöscht (Rücksetzroutinen). Dann wird ein nicht dargestellter Bezugspunkt, der zum Beispiel links oben im ersten Nutzen liegt, angefahren (Teach-Punkt). Daraufhin werden die Koordinaten in Parameterform automatisch in die Robotersteuerung 5 übernommen.

Alle typspezifischen Maße und Geometrien können aus maßstäblichen Lay-out-Zeichnungen gewonnen und off-line als Grundprogramm programmiert werden.

Anschließend wird über Signale, die über die Gruppe 8 laufen, geprüft, ob in der Eingabeeinrichtung 9 bereits Werte gespeichert sind (Sensor-Korrekturen). Dann wird der Bewegungsablauf unter Berücksichtigung eventuell eingegebener Werte abgefahren (Bahnkoordinaten) ,bis das erste Muster vollkommen mit einer Abdeckung versehen ist (Abdeckprozeß 1).

Daraufhin wird die Eingabeeinrichtung 9 für den zweiten Flächenbereich 3 abgefragt und mit diesen Werten bis zum Abdeckprozeß 2 der beschriebene Prozeßverlauf wiederholt.

Nach Erledigen einer Schaltung wird jeweils im Programm abgefragt, ob noch weitere Schaltungen auf dem Nutzen zu bearbeiten sind. Wenn das der Fall ist, wird der nächste Anfangspunkt ermittelt. Im anderen Fall ist das Ende des Bewegungsablaufs erreicht.

Das Beurteilen des Prozesses und in der Folge das Einstellen eines oder mehrerer Signalgeber (Potentiometer) erfolgt durch eine Bedienperson. Jedes einzelne Bewegungsmuster kann durch Sollwertvorgabe über diese Potentiometer und die analoge Sensorschnittstelle folgende Korrekturen erfahren:

    a) x- und/oder y-Verschiebung
    b) Vergrößern und/oder Verkleinern in x- und/oder y-Richtung.

Mit "a" werden in erster Linie Toleranzen ausgeglichen während mit "b" die Ausführung des Abdeckflecks beeinflußt wird sowie Unterschiede im Fließverhalten der Epoxy-Masse ausgeglichen werden können.

## Ansprüche

1. Anordnung zum Beeinflussen des Bewegungsablaufs von programmierbaren Geräten, zum Beispiel IR, mit einer Sensorschnittstelle beim automatischen Auftragen von Abdeckmassen, Klebern, Schäumen, Farben usw. auf flächige oder räumliche Bauteile, zum Beispiel beim Abdecken von elektronischen Bauteilen auf Hybridschaltungen, **dadurchgekennzeichnet,** daß zum Korrigieren des Programms entsprechend dem jeweiligen Anwendungsfall Schaltmittel, zum Beispiel Potentiometer, vorgesehen sind, über die in Verbindung mit der Sensorschnittstelle (6) Verschiebungen der Bewegungsmuster (Figur 3) relativ zum Bauteil (Nutzen) (Figur 1) in x-und y-Richtung und Größenveränderungen der Bewegungsmuster in beiden Koordinatenrichtungen unabhängig voneinander auch während des Bewegungsablaufs zu erzielen sind.

2. Anordnung nach Anspruch 1, **dadurch gekennzeichnet,** daß der IR (4) den oder die Nutzen (Figur 1) verfährt und die Kartuschen (l2) ortsfest sind.

EP 0 328 887 A1

FIG 1

FIG 3

FIG 2

# FIG 4

```
( Programmanfang )
        |
[ Rücksetzroutinen ]
        |
[ Bezugspunkt anfahren
   (Teachpunkt) ]
        |
[ Koordinaten in
   Parameter laden ]
        |
[ Typspezifische Werte in
   Parameter laden ]
        |
[ Sensor-Korrekturen
   laden ]
        |
[ Bahnkoordinaten
   ermitteln ]
        |
/ Abdeckprozeß 1 /
        |
[ Sensor-Korrekturen
   laden ]
        |
[ Bahnkoordinaten
   ermitteln ]
        |
/ Abdeckprozeß 2 /
        |
< Nutzen
  abgearbeitet
     ? >  ──→  [ nächsten Anfangspunkt
                  ermitteln ]
        |
    ( ENDE )
```

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | GB-A-2 096 362 (CINCINATTI MILACRON) * Seite 12, Zeilen 27-97; Figuren 7A,7B * --- | 1,2 | G 05 B 19/42 G 05 B 19/18 |
| A | EP-A-0 035 282 (THERMWOOD CORP.) * Seite 12; Figuren 3,4 * ----- | 1,2 | |

RECHERCHIERTE
SACHGEBIETE (Int. Cl.4)

G 05 B

Der vorliegende Recherchenbericht wurde für alle Patentansprüche erstellt

| Recherchenort | Abschlußdatum der Recherche | Prüfer |
|---|---|---|
| DEN HAAG | 26-05-1989 | MOYLE J.F. |

EPO FORM 1503 03.82 (P0403)